# EUROPÄISCHE PATENTSCHRIFT

(11) **EP 4 283 597 B1**
(45) Veröffentlichungstag und Bekanntmachung des Hinweises auf die Patenterteilung: **18.02.2026**
(21) Anmeldenummer: 23171585.5
(22) Anmeldetag: 04.05.2023
(51) Int. Cl.: G09F 3/00, G09F 3/20

(54) **MARKIERERSTREIFEN UND EINE REIHUNG AUS ELEKTRISCHEN GERÄTEN MIT EINEM MARKIERERSTREIFEN**
MARKER STRIP AND AN ARRAY OF ELECTRICAL DEVICES WITH A MARKER STRIP
BANDES DE MARQUAGE ET UN CLASSEMENT D'APPAREILS ÉLECTRIQUES AVEC UNE BANDE DE MARQUAGE

(30) Priorität: 20.05.2022 DE 102022112750
(43) Veröffentlichungstag der Anmeldung: 29.11.2023
(73) Patentinhaber: Weidmüller Interface GmbH & Co. KG, 32758 Detmold (DE)
(72) Erfinder: DOGAN, Faysal, 32805 Horn-Bad Meinberg (DE); WIENEKE, Andreas, 32657 Lemgo (DE); SONDERMANN, Tobias, 33104 Paderborn (DE)
(74) Vertreter: Specht, Peter

(56) Entgegenhaltungen:
- DE-A1- 102009 006 793
- DE-A1- 102015 109 020
- DE-U1- 202004 010 070
- DE-U1- 202012 103 309

## Beschreibung

Die Erfindung betrifft einen Markiererstreifen nach dem Oberbegriff des Anspruchs 1 und eine Reihung aus elektrischen Geräten mit einem Markiererstreifen.

Ein solcher Markiererstreifen ist aus der WO 2016/037874 A1 bzw. der gattungsgemäßen DE 10 2015 109 020 A1 bekannt.

Sind auf einer Montagebasis eine Mehrzahl oder eine Vielzahl von elektrischen Geräten wie Reihenklemmen aneinandergereiht, die jeweils eine Rastkontur, insbesondere eine Markierer-Rastaufnahme, aufweisen, so dass sich in der Flucht der Geräte im Bereich der Markierer-Rastaufnahmen ein Rastkanal ausbildet, vereinfacht es den Markiervorgang, wenn anstelle einer Mehrzahl von vollständig vereinzelten Markiererelementen streifenförmig miteinander verbundene Markiererelemente eingesetzt werden. Beispielsweise zum Markieren einer Reihenklemmenanordnung auf einer Tragschiene ist es dann lediglich notwendig, den Markiererstreifen über den Bereich der aneinander gereihten Rastkonturen der Reihenklemmen zu legen und dann von oben so auf die einzelnen Markiererelemente zu drücken, dass ein sicheres Verrasten der Markiererelemente an den Geräten, insbesondere den Reihenklemmen erfolgt. Dabei soll der Markiererstreifen bzw. sollen dessen Markiererelemente insbesondere für ein Bedrucken in der Thermotransfertechnik und deren Randbedingungen geeignet sein.

Zur Herstellung derartiger Markiererstreifen werden zum Beispiel Spritzgießverfahren genutzt, wobei Streifen mit einer definierten Länge von beispielsweise acht Markiererelementen hergestellt werden, die dann zusammengefügt werden, um eine Rolle mit einem langen Markiererstreifen bestücken zu können, von dem dann wiederum Markiererstreifen mit einer gewünschten Menge von Markierelementen abgelängt werden können. Es gestaltet sich dabei insbesondere als schwierig, zuverlässig und ohne Versatz im Raster aus den einzelnen spritzgegossenen Streifen einen übergeordneten "Endlosstreifen" zum Aufrollen auf eine Rolle zu fertigen.

Nach der WO 2016/037874 A1 bzw. der DE 10 2015 109 020 A1 weist der Markiererstreifen Bereiche aus wenigstens zwei verschiedenen Kunststoffmaterialien verschiedener Härte auf. Die Rastkontur jedes Markiererelementes besteht aus einem härteren Kunststoffmaterial und die Markierplatte besteht zumindest im Bereich des Beschriftungsfeldes aus einem weicheren Kunststoffmaterial.

Vorzugsweise ist der Markiererstreifen zunächst im Extrusionsverfahren hergestellt. Gefertigt wird er vorzugsweise in einem Mehrkomponenten, insbesondere einem Zwei-Komponenten-Co-Extrusionsverfahren.

Derart ist es möglich, jeweils für die Bereiche der Markierplatte mit dem Beschriftungsfeld einerseits und die Rastkontur andererseits Kunststoffe verschiedener Härte einzusetzen. Das Zwei-Komponenten-Co-Extrusionsverfahren ist ein zuverlässiger und kostengünstiger Prozess, insbesondere im Vergleich zum Spritzgießen. Durch das Extrudieren kann einfach ein Endlosstreifen zum Aufwickeln auf eine Rolle gefertigt werden. Durch das Verwenden der Extrusion, insbesondere Coextrusion, können dabei die Markiererstreifen bzw. dessen Markiererelemente insbesondere für ein Bedrucken in der Thermotransfertechnik genutzt werden.

Nach der besonders bevorzugten Variante ist es weiter besonders vorteilhaft, wenn die Rastkontur jedes Markiererelementes aus dem härteren Kunststoffmaterial besteht, um sie gut und sicher an dem jeweiligen elektrischen Gerät verrasten zu können. Es ist zudem vorteilhaft, wenn die Markierplatte zumindest im Bereich des Beschriftungsfeldes aus dem weicheren Kunststoffmaterial besteht. Denn so ist sie präziser zu bedrucken. Das weichere Material erleichtert die automatische Anpassung an den Druckkopf und ist auch für den Druckkopf schonender als ein härteres Material. Zudem werden Einfallstellen verhindert und es ist denkbar, die bedruckbaren Bereiche länger auszulegen, da sie im Bereich des Druckkopfes weniger leicht verkanten und/oder nicht von der Heizleiste abheben. Es ist ferner möglich, ein besonders gut bedruckbares Material auszuwählen, ohne dass darauf Rücksicht genommen werden muss, dass das Material für die Rastfunktion hart genug ist, welche die Raststege bzw. Rastkonturen ausbilden.

Es ist alternativ oder ergänzend ebenfalls besonders vorteilhaft, wenn der Verbindungsbereich zwischen den Markierelementen jeweils aus dem weicheren Kunststoffbereich besteht. Denn dies ermöglicht, durch entsprechendes Ziehen oder Stauchen dieses Bereiches am Montageort kleinere Toleranzen, die durch den Anreihvorgang der elektrischen Geräte entstehen, jeweils auszugleichen. Zudem wird das Aufwickeln auf einer Rolle erleichtert.

Allerdings ist es doch so, dass bei verschiedenen Rastermaßen der weichere Bereich relativ stark gelängt oder gestaucht werden muss, um den Markiererstreifen im Markiererkanal zu verrasten.

Es ist die Aufgabe der vorliegenden Erfindung, dieses Problem zu verringern.

Die Erfindung löst diese Aufgabe durch den Gegenstand des Anspruchs 1, also durch einen Markiererstreifen, der einen streifenförmigen Beschriftungsstreifen aus Kunststoffmaterial aufweist, der an einer ersten Seite - einer Beschriftungsseite - mit einem Drucker beschriftbar ist und der an einer der ersten Seite gegenüberliegenden zweiten Seite eine Mehrzahl von Markierer-Rastkonturen aus Kunststoffmaterial aufweist, die zum Verrasten in Markierer-Rastaufnahmen aneinander gereihter elektrischer Geräte ausgelegt sind, wobei der Markiererstreifen eine Haupterstreckungsrichtung aufweist und wobei die Rastkonturen in Haupterstreckungsrichtung X in einem Rastermaß X_{R} an der zweiten Seite des Beschriftungsstreifens angeordnet sind, wobei das Rastermaß X_{R} kleiner gleich 2 mm ist.

Das sehr kleine Rastermaß XR der Rastkonturen an der zweiten Seite des Beschriftungsstreifens führt dazu, dass ein Markiererstreifen einer Bauart besonders vorteilhaft zur Markierung elektrischer Geräte verschiedenster Breite nutzbar ist.

Bevorzugt kann insofern vorgesehen sein, dass das Rastermaß X_{R}, in welchem die Markierer-Rastaufnahmen an der zweiten Seite des Beschriftungsstreifens verteilt sind, kleiner gleich 1,8 mm und größer als 1,2 mm, beispielsweise = 1,5 mm, ist.

Der Markiererstreifen kann insgesamt in sämtlichen Bereichen aus einem einzigen Kunststoffmaterial bestehen. Er kann in einem Extrusionsverfahren gefertigt sein. Er kann auch in einem Spritzgussverfahren gefertigt sein. Er kann materialeinheitlich aus einem einzigen Kunststoffmaterial bestehen, z.B., wenn berührungslose Markierungstechnologien, wie z.B. Laser, zum Beschriften - was im weitesten Sinne als Markieren verschiedenster Art zu verstehen ist - eingesetzt werden. Zur Beschriftung können aber auch andere Druckverfahren verschiedenster Art eingesetzt werden.

Zum technologischen Hintergrund wird noch die DE 20 2012 103 309 A1 genannt, die Querverbinderkämme für Reihenklemmen offenbart.

Der Markiererstreifen kann auch in einem Koextrusionsverfahren oder einem Spritzgussverfahren aus zwei Kunststoffmaterialien gefertigt sein, wobei bevorzugt der Beschriftungsstreifen aus einem ersten weicheren Kunststoffmaterial gefertigt sein kann und die Markierer-Rastkonturen aus einem zweiten härteren Kunststoffmaterial gefertigt sein kann, so dass einerseits ein gutes Beschriften und andererseits ein gutes Befestigen des Markiererstreifens am elektrischen Gerät möglich ist.

Nach einer bevorzugten Variante kann vorgesehen sein, dass die jeweilige Rastkontur eine, zwei oder mehr Raststege aufweist. Dabei kann vorgesehen sein, dass der eine oder die zwei oder mehreren Raststege in einer gemeinsamen Ebene angeordnet sind. Alternativ kann aber auch vorgesehen jeweils nur ein Raststeg je Rastkontur vorgesehen ist und dass dann die Raststege insgesamt z.B. abwechselnd "rechts" und "links" am Markiererstreifen verteilt sind.

Nach einer weiteren Ausgestaltung kann vorgesehen sein, dass eine oder mehrere Perforationen in einem einen gleichen Rastermaß wie die Rastkonturen vorgesehen sein können, insbesondere zur besseren Anpassung auf die Markierungslänge des Streifenmaterials.

Die Erfindung schafft sodann auch eine Reihung elektrischer Geräte mit einem Markiererstreifen ach einem der auf diesen bezogenen Ansprüche, wobei die elektrischen Geräte jeweils eine Markierer-Rastaufnahme aufweisen, wobei mehrere Rastaufnahmen über mehrere angereihte elektrische Geräte hinweg einen Rastkanal ausbilden, in welche die Rastkonturen eingreifen, wobei mehr als eine einzige der Rastkonturen jeweils in eine der Markierer-Rastaufnahmen der aneinander gereihten Geräte eingreift. So können z.B. zwei oder mehr der Rastkonturen in nur eine jeweilige der Rastaufnahmen eingreifen.

Auch hier führt das relativ kleine Rastermaß X_{R} der Rastkonturen an der zweiten Seite des Beschriftungsstreifens führt dazu, dass ein Markiererstreifen einer Bauart besonders vorteilhaft zur Markierung elektrischer Geräte verschiedenster Breite nutzbar ist

Dabei kann insbesondere vorteilhaft vorgesehen sein, dass das Rastermaß X_{R}, in welchem die einzelne der Rastkonturen an der zweiten Seite des Beschriftungsstreifens in der Haupterstreckungsrichtung des Markiererstreifens verteilt sind, weniger als halb so groß ist wie das kleinste Maß, insbesondere Rastermaß, der aneinander reihbaren elektrischen Geräte in dieser Richtung. wie das kleinste Maß, insbesondere Rastermaß, der aneinander reihbaren elektrischen Geräte in der Haupterstreckungsrichtung bzw. in der Anreihrichtung der elektrischen Geräte.

Es kann zudem vorgesehen sein, dass im Bereich einzelner Wände der Markierer-Rastaufnahmen einzelne der Rastkonturen durch jeweils eine der Wände etwas schräg zur X-Y-Ebene ausgerichtet werden, in welcher sich die Rastkonturen im Wesentlichen erstrecken. Dies wird insbesondere durch das kleine Rastermaß ermöglicht, so dass ein Schrägstellen im Bereich der Wände überhaupt erst auftreten kann.

Vorteilhafte Ausgestaltungen der Erfindung sind den Unteransprüchen zu entnehmen.

Nachfolgend wird die Erfindung unter Bezug auf die Zeichnung anhand von Ausführungsbeispielen näher beschrieben. Es zeigt:
- Fig. 1: in 1a) und 1b) verschiedene perspektivische Ansichten eines erfindungsgemäßen Markiererstreifens, sowie in 1c), 1d), 1e) und 1f) verschiedenen Seitenansichten und Draufsichten auf den Markiererstreifen aus 1a) und 1b);
- Fig. 2: eine Seitenansicht eines in eine Markiereraufnahme nur abschnittsweise dargestellten Gehäuses eingesetzten erfindungsgemäßen Markiererstreifens;
- Fig. 3: in 3a) eine Schnittansicht durch den Bereich eines aus erfindungsgemäßen Markiereraufnahmen aneinander gereihter Gehäuse elektrischer Geräte gebildeten Markiererkanals, in welchen ein Markiererstreifen eingesetzt ist sowie in 3b) bis 3e) Schnittansichten analog zu 3a) mit anderen Reihungen elektrischer Geräte;
- Fig. 4: in 4a) eine perspektivische Ansicht des Bereichs des aus Markiereraufnahmen aneinander gereihter Gehäuse elektrischer Geräte gebildeten Markiererkanals, in welchen ein Markiererstreifen eingesetzt werden soll sowie in 4b) bis 4e) Schnittansichten analog zu 4a) mit anderen Reihungen elektrischer Geräte;
- Fig. 5: in 5a) und 5b) verschiedene perspektivische Ansichten einer zweiten Ausgestaltung eines erfindungsgemäßen Markiererstreifens;
- Fig. 6: in 6a) eine perspektivische Ansicht einer dritten Ausgestaltung eines erfindungsgemäßen Markiererstreifens und in 6b) und 6c) eine Seitenansicht und eine Schnittansicht dieser dritten Ausgestaltungsform des Markiererstreifens; und
- Fig. 7: in 7a) - 7e) Anordnungen analog zu Fig. 4a) - 4e), die nicht unter Anspruch 1 fallen.

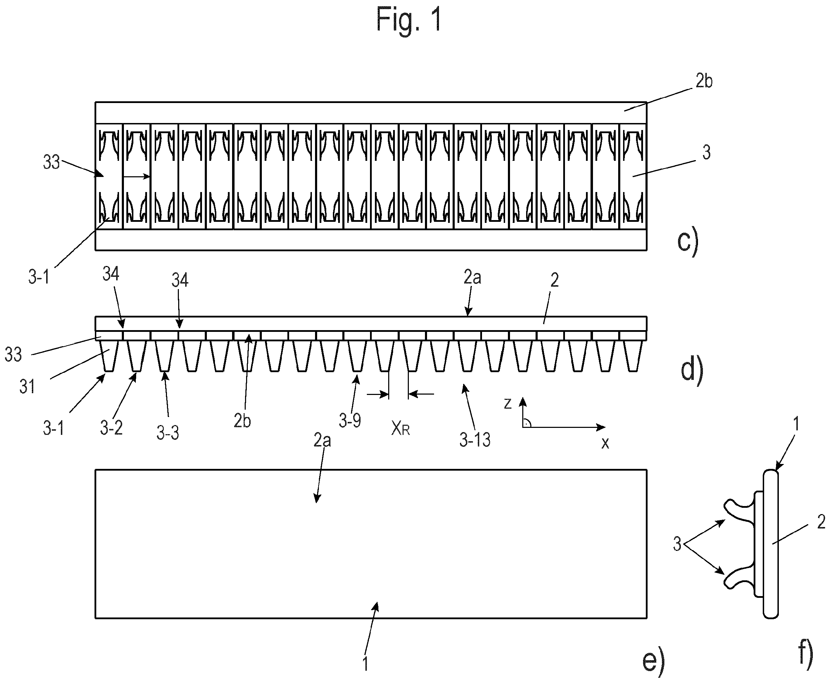

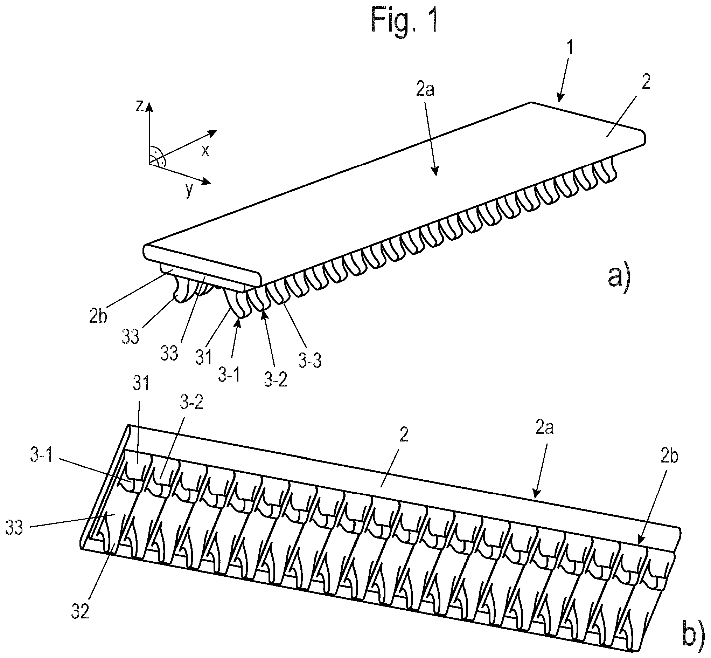

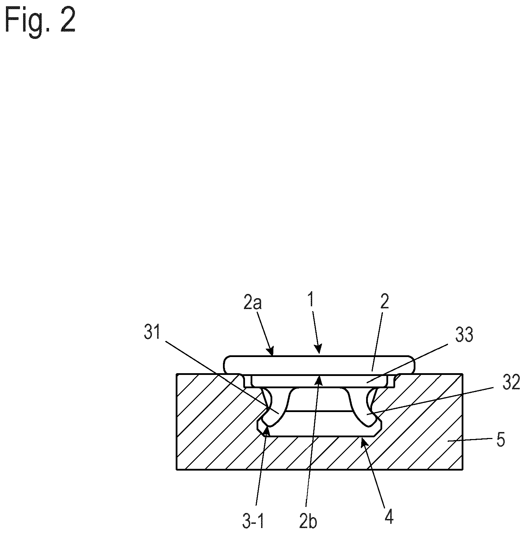

Die Fig. 1a) bis Fig. 1e) zeigen einen Markiererstreifen 1, der einen streifenförmigen Beschriftungsstreifen 2 aus einem ersten Kunststoffmaterial aufweist, der an einer ersten Seite 2a - einer Beschriftungsseite 2a - mit einem Drucker beschriftet werden kann und der an der der ersten Seite gegenüberliegenden zweiten Seite 2b einer Mehrzahl von Rastkonturen 3 bzw. 3-1, 3-2, 3-3, ... aus einem zweiten Kunststoffmaterial aufweist, die zum Verrasten in einer korrespondierenden Markiereraufnahme 4 bzw. 4a, 4b, 4c, ...eines elektrischen Gerätes 5 bzw. 5a, 5b, 5c ausgelegt sind (siehe auch Fig. 2). Das elektrische Gerät 5 ist ein anreihbares elektrisches Gerät wie eine scheibenförmige Reihenklemme oder ein scheibenförmiges Elektronikgehäuse. In Fig. 2 ist ein Teil eines Gehäuses des Gerätes dargestellt, wobei das Gehäuse vorzugsweise elektrische Komponenten wie eine Anschlussvorrichtung für einen Leiter und/oder eine Stromschiene und/oder ein elektrisches Bauelement usw. aufweisen kann.

Der Markiererstreifen 1 kann als Rollenmaterial gefertigt und bereitgestellt werden und wird zur Montage auf einer Gehäusereihung entsprechend zur Länge der Reihung abgelängt. Der Markiererstreifen 1 kann aber auch als Meterware/Stege angeboten werden, bevorzugt bei geplantem Einsatz berührungsloser Markierungstechnologien. Es können auch eher kurze Stege verschiedener Länge gefertigt werden.

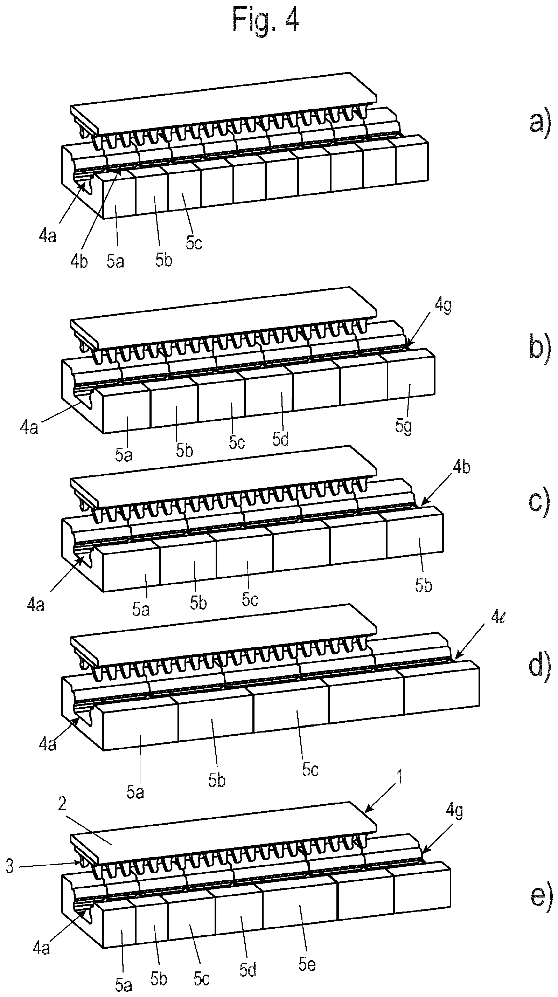

Die Haupterstreckungsrichtung des Markiererstreifens 1 in Anreihrichtung ist mit X bezeichnet. Zum Aufrasten auf jeweils eines der Geräte 5 ist der abgelängte Markiererstreifen 1 im Wesentlichen senkrecht dazu in eine Aufrastrichtung -Z zu bewegen (Siehe auch Fig. 4a - 4e). Der Beschriftungsstreifen 2 erstreckt sich hier im Wesentlichen in einer zur Aufrastrichtung -Z senkrechten X-/Y- Ebene.

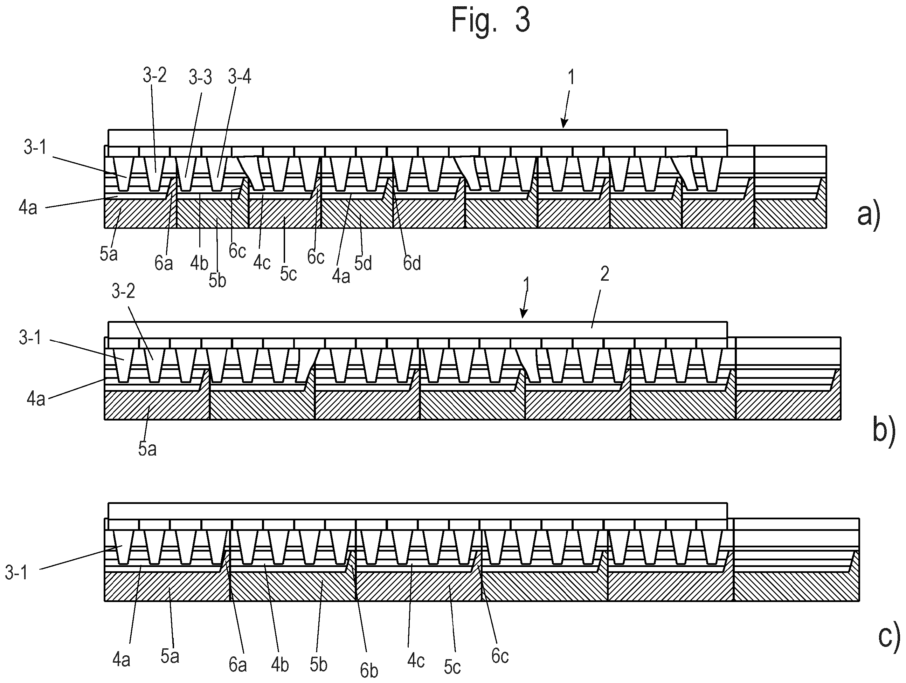

Die jeweilige Rastkontur 3-1, 3-2, 3-3, ... ist hier aus einem oder mehr Raststegen - hier jeweils aus zwei (hier hakenförmigen) - Raststegen 31, 32 gebildet, die in einem plattenartigen Grundbereich 33 vorgesehen sind, der an die zweite Seite 2b des Beschriftungsstreifens angrenzen kann. Der oder die hakenförmigen Raststege 31, 32 der jeweiligen Rastkontur 3-1, 3-2, 3-3, sind dazu ausgebildet, in eine korrespondierend geformte Markierer-Rastaufnahme 4a, 4b, 4c, ... der elektrischen Geräte 5 einzugreifen, so dass sie nach dem Aufrasten am elektrischen Gerät 5 rastend gehalten sind (siehe insbesondere die Fig. 2 und 3a-e).

Diese Rastkonturen 3-1, 3-2, 3-3, ... sind in einem relativ kleinen Rastermaß X_{R} (siehe Fig. 3a) von weniger als 2 mm an der zweiten Seite 2b in der Haupterstreckungsrichtung X des Beschriftungsstreifens 2 aneinandergereiht bzw. verteilt. Sie sind vorzugsweise direkt aneinandergereiht und jeweils jedenfalls nahe zum Beschriftungsstreifen 2 vorzugsweise nur durch einen (schmalen) Schlitz 34 jeweils voneinander getrennt. Somit entspricht das Rastermaß X_{R} hier quasi der Breite der Basis bzw. des plattenartigen Grundbereichs 33 in X-Richtung entspricht.

Der Markiererstreifen 1 kann in einem Extrusionsvorgang, insbesondere oder auch in einem Koextrusionsvorgang, gefertigt worden sein, bei welchem der Beschriftungstreifen 2a aus dem ersten Kunststoffmaterial und ein durchgehender "Raststreifen" aus dem zweiten Kunststoffmaterial durchgehend gemeinsam extrudiert worden sind.

Sodann wird der "Raststreifen", aus dem die einzelnen Rastkonturen 3-1, 3-2, 3-3, ... gebildet werden sollen, durch Schnitte oder Stanzungen, welche vorzugsweise das zweite Kunststoffmaterial bzw. den Raststreifen senkrecht zur Längserstreckung des Raststreifens durchsetzen, in die einzelnen Rastkonturen 3-1, 3-2, 3-3, ... getrennt. Derart werden die einzelnen Rastkonturen 3-1, 3-2, 3-3, ... gebildet.

Andere Fertigungsverfahren sind aber ebenfalls denkbar.

Bevorzugt ist das erste Kunststoffmaterial des Beschriftungsstreifens 2 ein weicheres Kunststoffmaterial und das zweite Kunststoffmaterial ein härteres Kunststoffmaterial. Dies ist eine bevorzugte, nicht aber eine zwingend umzusetzende Ausgestaltung.

Ein solcher Markiererstreifen 1 ist gut in den Fig. 1a) bis 1e) zu erkennen.

Er eignet sich insbesondere hervorragend zur Verrastung an bzw. auch einer Reihung (und zur Markierung der Reihung) elektrischer Geräte 5a, 5b, 5c, ... die jeweils wenigstens eine Rastaufnahme 4a, 4b, 4c, ... aufweisen. Diese Rastaufnahmen 4a, 4b, 4c, ... können wiederum jeweils in Haupterstreckungsrichtung der aneinander gereihten Geräte 5a, 5b, 5c, ... eine seitliche Begrenzungswand bzw. Wand 6a, 6b, 6c, ...a, aufweisen, damit ggf. ein installiertes Markiererelement in der Reihung nicht in Anreihrichtung verrutschen kann, so dass eine eindeutige Zuordnung zwischen der Markierung/Beschriftung und dem jeweiligen elektrischen Gerät 5a, 5b, 5c, ... gegeben ist. Die Markiereraufnahmen 4a, 4b, 4c, ...fluchten in Anreihrichtung über mehrere der Geräte 5a, 5b, ... hinweg, so dass eine Art Markiererkanal gebildet wird, der aber von den Begrenzungswänden 6a, 6b, 6c, ...a, quasi immer wieder jedenfalls teilweise unterbrochen ist.

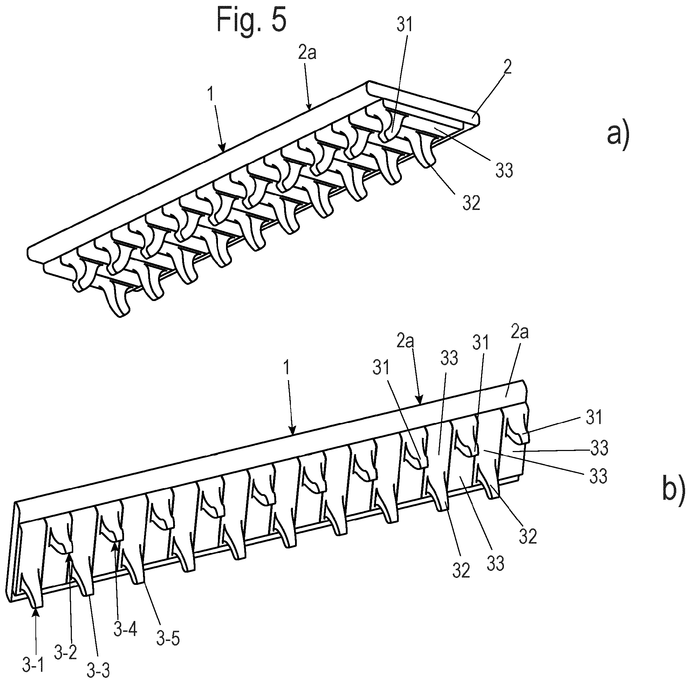

Besonders vorteilhaft ist das sehr kleine Rastermaß X_{R}, in welchem die Rastkonturen 3-1, 3-2, 3-3, ... an der zweiten Seite des Beschriftungsstreifens 2 verteilt sind, da mit diesem elektrische Geräte 5a, 5b, 5c, mit in ihrer Anreihrichtung verschiedenster Breite gut markierbar sind (Fig. 5a - 5e), ohne das verschiedenartige Markiererstreifen 1 gefertigt werden müssten. Das Rastermaß X_{R} ist kleiner als die kleinste Breite (in Anreihrichtung) der zu markierenden Geräte 5a, 5b, 5c, ..., vorzugsweise kleiner gleich der Hälfte der Breite der zu markierenden Geräte 5a, 5b, 5c, .... Das Rastermaß XVR, in welchem die Rastkonturen 3-1, 3-2, 3-3, ... an der zweiten Seite des Beschriftungsstreifens 2 verteilt sind. Das Rastermaß X_{R} ist vorzugsweise kleiner gleich (mathematisch: ≤) 2mm. Das Rastermaß X_{R} kann bevorzugt zwischen 1,3 mm und 1,7 mm liegen. Nach einem Beispiel liegt das Rastermaß X_{R} bei 1,5 mm. Dieses Ausführungsbeispiel ist beispielhaft in Fig. 1c dargestellt.

Die Rastkonturen 3a, 3b, 3c, .... der Geräte 5a, 5b, 5c, ... können sich senkrecht zur Anreihrichtung V-förmig verjüngen (Siehe Fig. 1d). Die Rastkonturen 3a, 3b, 3c, .... können zudem zunächst ausgehend von dem Beschriftungsstreifen 2 jeweils die plattenartige Basis 33 aufweisen und die zwei sich winklig von dem Sockel weg erstreckende Rasthaken 31, 32 zum Verrasten in korrespondierenden Hinterschnitten der Rastaufnahmen 4a, 4b, 4c, ....

Wie in Fig. 3a) bis e) sowie 4a) bis e) zu erkennen, führt das relativ kleine Rastermaß XR der Rastkonturen 3-1, 3-2, 3-3, ... an der zweiten Seite des Beschriftungsstreifens 2 dazu, dass ein Markiererstreifen 1 einer Bauart zur Markierung elektrischer Geräte 5a, 5b, 5c, ... verschiedenster Breite nutzbar ist. So liegt die Rasterbreite der elektrischen Geräte 5a, 5b, 5c, ... beispielsweise bei 3, 5mm. Wie zu erkennen, kann der Markiererstreifen 1 mit den Rastkonturen 3-1, 3-2, 3-3, ... in einer Rasterbreite von 1,5 mm dennoch sehr gut auf der Reihung aus den elektrischen Geräten 5a, 5b, 5c, ... befestigt werden. Es ist lediglich so, dass im Bereich einzelner Wände 6a, 6b, 6c, ... einzelne der Rastkonturen3-1, 3-2, 3-3, ... (in Fig. 3a z.B. der Rastkontur 3-5) durch die jeweilige Wand 6a, 6b, 6c, ... ggf. etwas schräg ausgerichtet werden können. Sie werden dazu etwas schiefgestellt oder etwas verbogen, sie sitzen aber dennoch rastend und ggf. etwas klemmend in dem Markiererkanal, der sich aus den aneinander gereihten Rastaufnahmen 4a, 4b, 4c, ... über die aneinander gereihten Geräte 5a, 5b, 5c, ... hinweg gebildet hat.

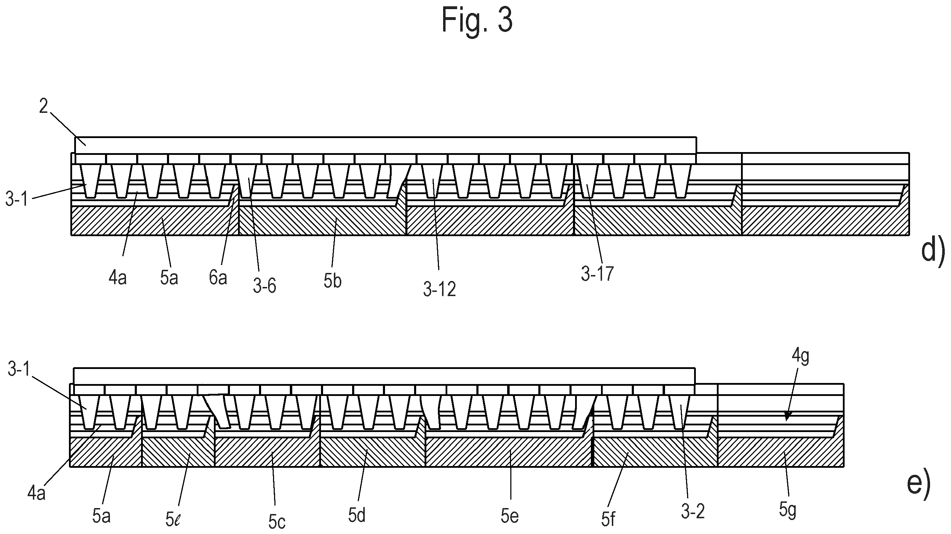

Analoges zeigen die Fig. 3b) und Fig. 3d, in welcher die Rasterbreite der Geräte 5a, 5b, 5c, .... 5,1 mm bzw. 8,1 mm beträgt.

In der Reihe der Fig. 3d liegt die Rasterbreite der Rastkonturen 3-1, 3-2, 3-3, ... bei 6,1mm, so dass es möglich ist, mehrere der Geräte 5a, 5b, 5c, ... hintereinander zu markieren, ohne dass eine Rastkontur 3-1, 3-2, 3-3, ... auf eine der Wände 6a, 6b, 6c, ...trifft und sich schräg stellt.

Die Fig. 3e zeigt eine Reihung aus elektrischen Geräten 5a, 5b, 5c, 5d, ... verschiedener Rasterbreite (reinbeispielhaft zweimal 3, 5mm, dann zweimal 5,1 mm, dann 8,1 mm, dann zweimal 6,1 mm). Auch solche Reihungen aus elektrischen Geräten 5a, 5b, 5c, ... jedenfalls teilweise verschiedener Breite können mit dem Markiererstreifen 1 mit den Rastkonturen 3-1, 3-2, 3-3, ... sehr kleiner Rasterbreite hervorragend markiert werden.

Analoges veranschaulicht die Fig. 4a) bis 4e), wobei die abgelängten Markiererstreifen hier vor dem Verrasten räumlich beabstandet über den aneinander gereihten Geräten 5a, 5b, 5c, 5d, ... dargestellt sind.

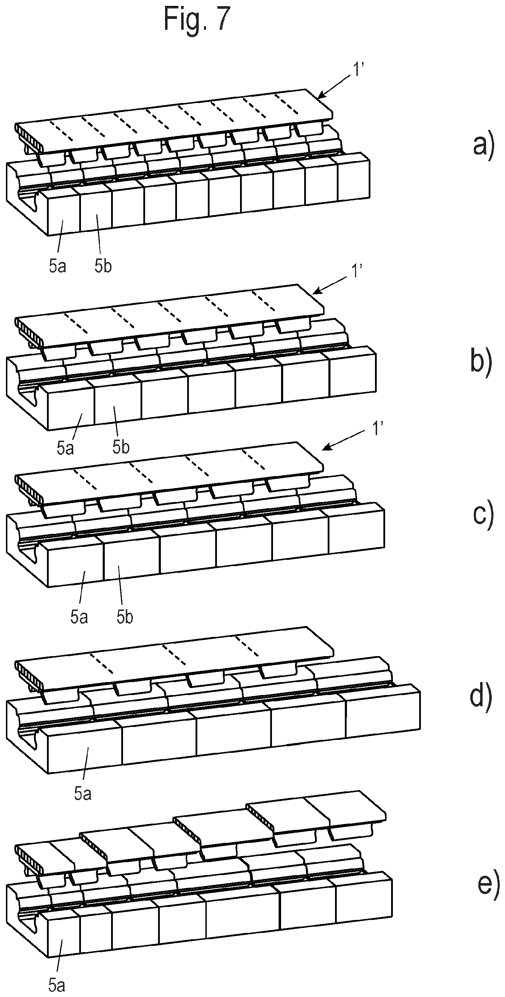

Die Fig. 7a) bis 7e) veranschaulichen, dass anders als nach der Erfindung nach dem Stand der Technik Markiererstreifen 1' mit Rastkonturen verschiedenster Rasterbreite zu fertigen waren, so Markiererstreifen 1', deren Rastermaß im Bereich der Rastkonturen dem der zu markierenden Reihenklemmen (3,5 mm, 5,1 mm, 6,1 mm, 8,1 mm) entsprechen musste. Dieser Aufwand wird erfindungsgemäß deutlich verringert, so dass quasi nur noch ein einziger Typ von Markiererstreifen 1 mit einem einzigen Rastermaß XR von Rastkonturen 3-1, 3-2, 3-3, ... gefertigt werden muss.

Es ist weiter vorteilhaft, wenn der Beschriftungssteifen 2 ganz oder teilweise aus dem weicheren Material besteht. Denn dieses Material lässt sich leichter und präziser durch den Bereich eines Druckkopfes leiten.

Zum Markieren einer Reihenklemmenanordnung auf einer Tragschiene ist es dann lediglich notwendig, den Markiererstreifen 1 - siehe Fig. 3a) - über den Bereich der aneinander gereihten Markierer-Rastaufnahmen 4a, 4b, 4c, ... der Reihenklemmen zu legen und dann von oben so in diese einzudrücken, dass ein sicheres Verrasten der Rastkonturen 3-1, 3-2, 3-3, ... an den Geräten, insbesondere an den Gehäusen der Geräte, erfolgt. Sodann oder zuvor kann der Markiererstreifen 1 von einer Art "Endlosstreifen", beispielsweise auf einer Rolle oder dem erwähnten längeren Steg, passend abgelängt worden sein.

Nach den Fig. 1a) bis 4e) ist beispielhaft vorgesehen, dass die jeweilige Rastkontur 3-1, 3-2, 3-3, ... zumindest die zwei Raststege 31, 32 aufweist, wobei vorgesehen ist, dass die jeweiligen zwei Raststege 31, 32 in einer gemeinsamen Ebene angeordnet sind, die senkrecht zur Anreihrichtung X ausgerichtet ist. Dabei sind nach Fig.1a bis 4e und 6 jeweils zwei der Raststege 31, 32 jeweils in dem plattenartigen Grundbereich 33 verbunden.

Alternativ kann aber auch vorgesehen, dass die Raststege 31, 32 in zueinander versetzten Ebenen angeordnet sind. Nach Fig. 5a, b ist vorgesehen, dass je plattenartigem Grundbereich 33 jeweils nur einer der Raststege 31, 32 vorgesehen ist. Es ist dabei zudem vorgesehen, dass die jeweiligen zwei Raststege 31, 32 abwechselnd in zueinander versetzten Ebenen angeordnet sind - Fig. 5a, 5b. Sie können dann auf zwei Längsseiten des Markiererstreifens 1 jeweils in dem jeweiligen Rastermaß abwechselnd an den in Haupterstreckungsrichtung X aufeinander folgenden Grundbereichen 33 angeordnet sein. Nach Fig. 5a - b sind wiederum Bereiche aus zwei verschieden harten Kunststoffmaterialien vorgesehen.

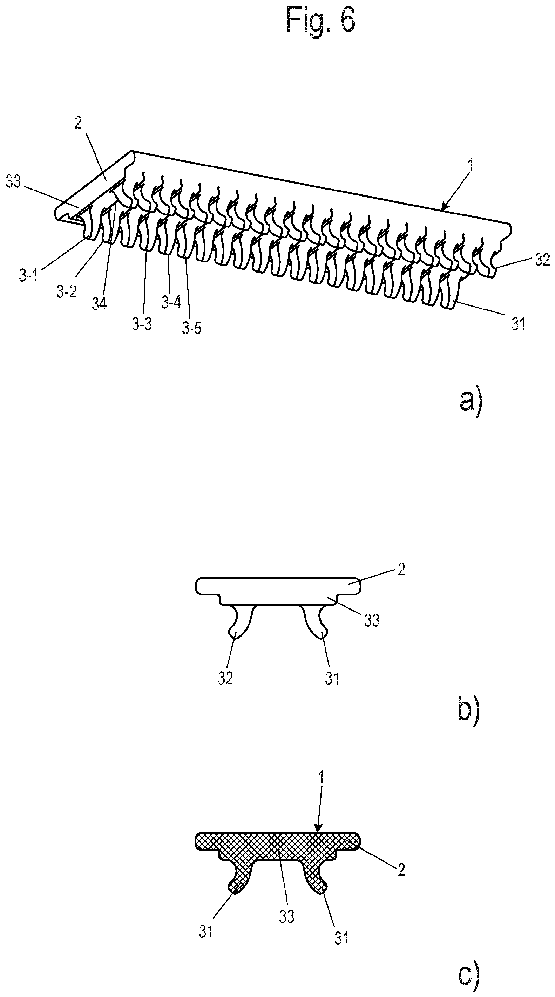

Nach Fig. 6a - c ist hingegen der gesamte Markiererstreifen 1 aus einem einzigen Material gefertigt. Ansonsten entspricht der Aufbau hier der Fig.1. Der Beschriftungsstreifen 2 ist somit materialeinheitlich mit den Rastkonturen 3-1, 3-2, usw. gefertigt.

Dies kann auch nach den Figuren 1a bis 5b vorgesehen sein. Der Markierstreifen der Fig. 6 könnte wiederum alternativ auch aus den zwei Materialien bestehen. Es könnten auch mehr als zwei Materialien eingesetzt werden.

### Bezugszeichen

| | |
|---|---|
| Markiererstreifen | 1 |
| Beschriftungsstreifen | 2 |
| Beschriftungsseite | 2a |
| zweite Seite | 2b |
| Rastkonturen | 3-1, 3-2, 3-3, ... |
| Raststege | 31, 32 |
| Grundbereich | 33 |
| Schlitz | 34 |
| Markierer-Rastaufnahme | 4a, b, c, ... |
| Gerät | 5a, b, c, ... |
| Begrenzungswand | 6a, 6b, 6c, ... |
| Aufrastrichtung | -Z |
| Haupterstreckungsrichtung | X |
| Richtung | Y |

## Patentansprüche

1. Markiererstreifen (1), der einen streifenförmigen Beschriftungsstreifen (2) aus Kunststoffmaterial aufweist, der an einer ersten Seite (2a) - einer Beschriftungsseite (2a) - mit einem Drucker beschriftbar ist und der an einer der ersten Seite gegenüberliegenden zweiten Seite (2b) eine Mehrzahl von Markierer-Rastkonturen (3-1, 3-2, 3-3, ... ) aus Kunststoffmaterial aufweist, die zum Verrasten in Markierer-Rastaufnahmen (4a, 4b, 4c,, ...) aneinander gereihter elektrischer Geräte (5) ausgelegt sind, wobei der Markiererstreifen (1) eine Haupterstreckungsrichtung (X) aufweist und wobei die Rastkonturen (3-1, 3-2, 3-3, ... ) in Haupterstreckungsrichtung X in einem Rastermaß XR an der zweiten Seite (2b) des Beschriftungsstreifens (2) angeordnet sind, **dadurch gekennzeichnet, dass** das Rastermaß X_{R}, in welchem die Rastkonturen (3-1, 3-2, 3-3, ... ) an der zweiten Seite (2b) des Beschriftungsstreifens (2) verteilt sind, kleiner gleich 2 mm ist.

2. Markiererstreifen (1) nach Anspruch 1, **dadurch gekennzeichnet, dass** das Rastermaß X_{R}, in welchem die Rastkonturen (3-1, 3-2, 3-3, ... ) in Haupterstreckungsrichtung X an der zweiten Seite (2b) des Beschriftungsstreifens (2) verteilt sind, kleiner gleich 1,8 mm und größer als 1,2 mm ist.

3. Markiererstreifen (1) nach Anspruch 2, **dadurch gekennzeichnet, dass** das Rastermaß X_{R}, in welchem die Rastkonturen (3-1, 3-2, 3-3, ... ) in Haupterstreckungsrichtung X an der zweiten Seite (2b) des Beschriftungsstreifens (2) verteilt sind, 1,5 mm beträgt.

4. Markiererstreifen (1) nach einem der vorstehenden Ansprüche, **dadurch gekennzeichnet, dass** die jeweilige Rastkontur (3-1, 3-2, 3-3, ...) einen, zwei oder mehr Raststege (31, 32) aufweist.

5. Markiererstreifen (1) nach einem der vorstehenden Ansprüche, **dadurch gekennzeichnet, dass** jeweils zwei der Raststege (31, 32) in einer gemeinsamen Ebene angeordnet sind, die senkrecht zur Anreihrichtung X ausgerichtet ist.

6. Markiererstreifen (1) nach einem der vorstehenden Ansprüche, **dadurch gekennzeichnet, dass** die Raststege (31, 32) einzeln zueinander versetzt links und rechts an dem Markiererstreifen in dem Rastermaß verteilt sind.

7. Markiererstreifen (1) nach einem der vorstehenden Ansprüche, **dadurch gekennzeichnet, dass** je einer oder mehrere der Raststege (31, 32) jeweils an einem plattenartigen Grundbereich (33) ansetzen.

8. Markiererstreifen (1) nach einem der vorstehenden Ansprüche, **dadurch gekennzeichnet, dass** die plattenartigen Grundbereiche (33) benachbarter Markierer-Rastkonturen (3-1, 3-2, 3-3, ...) jeweils durch einen Schlitz (34) voneinander getrennt sind.

9. Markiererstreifen (1) nach einem der vorstehenden Ansprüche, **dadurch gekennzeichnet, dass** sich die Raststege (31, 32) der Markierer-Rastaufnahmen (4a, 4b, 4c, ...) von dem jeweiligen plattenartigen Grundbereich (33) weg verjüngen.

10. Markiererstreifen (1) nach einem der vorstehenden Ansprüche, **dadurch gekennzeichnet, dass** er als Steg gefertigt und bereitstellbar ist, insbesondere derart, dass aus dem Steg einer oder mehrere kürzere Markiererstreifen verschiedener Länge ablängbar sind.

11. Markiererstreifen (1) nach einem der vorstehenden Ansprüche, **dadurch gekennzeichnet, dass** er als Rollenmaterial gefertigt und bereitstellbar ist, so dass aus dem Rollenmaterial einer oder mehrere kürzere Markiererstreifen verschiedener Länge ablängbar sind.

12. Markiererstreifen (1) nach einem der vorstehenden Ansprüche, **dadurch gekennzeichnet, dass** er wenigstens eine oder mehrere Perforierungen aufweist, insbesondere in dem Rastermaß.

13. Markiererstreifen (1) nach einem der vorstehenden Ansprüche, **dadurch gekennzeichnet, dass** er aus einem einzigen Kunststoffmaterial gefertigt ist.

14. Markiererstreifen (1) nach einem der vorstehenden Ansprüche, **dadurch gekennzeichnet, dass** er aus zwei Kunststoffmaterialien gefertigt ist, wobei der Beschriftungsstreifen (2) aus einem ersten weicheren Kunststoffmaterial gefertigt ist und die Markierer-Rastkonturen aus dem zweiten härteren Kunststoffmaterial gefertigt ist.

15. Markiererstreifen (1) nach einem der vorstehenden Ansprüche, **dadurch gekennzeichnet, dass** er in einem Koextrusionsverfahren oder einem Spritzgussverfahren gefertigt ist.

16. Reihung aus elektrischen Geräten mit einem Markiererstreifen (1) nach einem der vorstehenden Ansprüche, **dadurch gekennzeichnet, dass** die elektrischen Geräte jeweils eine Markierer-Rastaufnahme (4a, 4b, 4c, ...) aufweisen, in welche die Rastkonturen (3-1, 3-2, 3-3, ... ) eingreifen, wobei in einer Anreihrichtung X der elektrischen Geräte (5a, 5b, 5c, ...) mehr als eine einzige Rastkontur (3-1, 3-2, 3-3, ... ) jeweils in eine der Markierer-Rastaufnahmen (4a, 4b, 4c) der aneinander gereihten Geräte (5a, 5b, 5c, ...) eingreift.

17. Reihung nach Anspruch 16, **dadurch gekennzeichnet, dass** das Rastermaß, in welchem die einzelne der Rastkonturen (3-1, 3-2, 3-3, ... ) an der zweiten Seite (2b) des Beschriftungsstreifens (2) verteilt sind, weniger als halb so groß ist wie das kleinste Maß, insbesondere Rastermaß, der aneinander reihbaren elektrischen Geräte in der Haupterstreckungsrichtung (X) bzw. in der Anreihrichtung der elektrischen Geräte (5a, 5b, 5c, ...).

18. Reihung nach Anspruch 16 oder 17, **dadurch gekennzeichnet, dass** im Bereich einzelner Wände (6a, 6b, 6c, ...) der Markierer-Rastaufnahmen (4a, 4b, 4c, ...) einzelne der Rastkonturen (3-1, 3-2, 3-3, ... ) durch jeweils eine der Wände etwas schräg zur X-Y-Ebene ausgerichtet werden, in welcher sich die Rastkonturen (3-1, 3-2, 3-3, ... ) im Wesentlichen erstrecken.

## Claims

1. Marker strip (1), which has a strip-shaped labelling strip (2) composed of plastic material, which can be labelled on a first side (2a) - a labelling side (2a) - using a printer and which has on a second side (2b) opposite the first side a multiplicity of marker latching profiles (3-1, 3-2, 3-3, ...) composed of plastic material, which are configured for latching in marker latching receptacles (4a, 4b, 4c, ...) of serially arranged electrical appliances (5), wherein the marker strip (1) has a main direction of extent (X) and wherein the latching profiles (3-1, 3-2, 3-3, ...) are arranged in the main direction of extent X in a grid dimension XR on the second side (2b) of the labelling strip (2), **characterised in that** the grid dimension X_{R} in which the latching profiles (3-1, 3-2, 3-3, ...) are distributed on the second side (2b) of the labelling strip (2) is smaller than or equal to 2 mm.

2. Marker strip (1) according to claim 1, **characterised in that** the grid dimension X_{R} in which the latching profiles (3-1, 3-2, 3-3, ...) are distributed in the main direction of extent X on the second side (2b) of the labelling strip (2) is smaller than or equal to 1.8 mm and larger than 1.2 mm.

3. Marker strip (1) according to claim 2, **characterised in that** the grid dimension X_{R} in which the latching profiles (3-1, 3-2, 3-3, ...) are distributed in the main direction of extent X on the second side (2b) of the labelling strip (2) is 1.5 mm.

4. Marker strip (1) according to any one of the preceding claims, **characterised in that** the respective latching profile (3-1, 3-2, 3-3, ...) has one, two or more latching webs (31, 32).

5. Marker strip (1) according to any one of the preceding claims, **characterised in that** in each case two of the latching webs (31, 32) are arranged in a joint plane which is oriented perpendicular to the series direction X.

6. Marker strip (1) according to any one of the preceding claims, **characterised in that** the latching webs (31, 32) are distributed offset individually with respect to one another to the left and right on the marker strip in the grid dimension.

7. Marker strip (1) according to any one of the preceding claims, **characterised in that** in each case one or more of the latching webs (31, 32) attach in each case to a plate-like base region (33).

8. Marker strip (1) according to any one of the preceding claims, **characterised in that** the plate-like base regions (33) of adjacent marker latching profiles (3-1, 3-2, 3-3, ...) are separated from one another in each case by a slot (34).

9. Marker strip (1) according to any one of the preceding claims, **characterised in that** the latching webs (31, 32) of the marker latching receptacles (4a, 4b, 4c, ...) taper away from the respective plate-like base region (33).

10. Marker strip (1) according to any one of the preceding claims, **characterised in that** it is manufactured and can be provided as a web in particular in such a manner that one or more shorter marker strips of various lengths can be cut to length from the web.

11. Marker strip (1) according to any one of the preceding claims, **characterised in that** it is manufactured and can be provided as a roll material so that one or more shorter marker strips of various lengths can be cut to length from the roll material.

12. Marker strip (1) according to any one of the preceding claims, **characterised in that** it has at least one or more perforations, in particular in the grid dimension.

13. Marker strip (1) according to any one of the preceding claims, **characterised in that** it is manufactured from a single plastic material.

14. Marker strip (1) according to any one of the preceding claims, **characterised in that** it is manufactured from two plastic materials, wherein the labelling strip (2) is manufactured from a first softer plastic material and the marker latching profiles are manufactured from the second harder plastic material.

15. Marker strip (1) according to any one of the preceding claims, **characterised in that** it is manufactured in a coextrusion process or an injection moulding process.

16. Series of electrical devices with a marker strip (1) according to any one of the preceding claims, **characterised in that** the electrical appliances have in each case a marker latching receptacle (4a, 4b, 4c, ...) into which the latching profiles (3-1, 3-2, 3-3, ...) engage, wherein, in a series direction X of the electrical appliances (5a, 5b, 5c, ...), more than a single latching profile (3-1, 3-2, 3-3, ...) engages in each case in one of the marker latching receptacles (4a, 4b, 4c) of the appliances (5a, 5b, 5c, ...) arranged in series.

17. Series according to claim 16, **characterised in that** the grid dimension in which the individual latching profiles (3-1, 3-2, 3-3, ...) are distributed on the second side (2b) of the labelling strip (2) is less than half the size of the smallest dimension, in particular grid dimension, of the electrical appliances which can be arranged in series in the main direction of extent (X) or in the series direction of the electrical appliances (5a, 5b, 5c, ...).

18. Series according to claim 16 or 17, **characterised in that** in the region of individual walls (6a, 6b, 6c, ...) of the marker latching receptacles (4a, 4b, 4c, ...) individual latching profiles (3-1, 3-2, 3-3, ...) are oriented by in each case one of the walls slightly obliquely with respect to the X-Y-plane in which the latching profiles (3-1, 3-2, 3-3, ...) substantially extend.

## Revendications

1. Bande de marquage (1) comportant une bande inscriptible (2) en forme de bande en matière plastique qui peut être marquée sur une première face (2a) - une face inscriptible (2a) - avec une imprimante et qui présente sur une deuxième face (2b) opposée à la première face plusieurs profils d'enclenchement de marqueurs (3-1, 3-2, 3-3, ...) en matière plastique conçus pour s'enclencher dans des réceptacles d'enclenchement de marqueurs (4a, 4b, 4c ...) d'appareillages électriques (5) alignés les uns avec les autres, la bande de marquage (1) présentant un sens d'étendue principal (X) et les profils d'enclenchement (3-1, 3-2, 3-3, ...) étant disposés dans le sens d'étendue principal X selon un écartement X_{R} sur la deuxième face (2b) de la bande inscriptible (2), **caractérisée en ce que** l'écartement X_{R} selon lequel les profils d'enclenchement (3-1, 3-2, 3-3, ...) sont répartis sur la deuxième face (2b) de la bande inscriptible (2) est inférieur ou égal à 2 mm.

2. Bande de marquage (1) selon la revendication 1, **caractérisée en ce que** l'écartement X_{R} selon lequel les profils d'enclenchement (3-1, 3-2, 3-3, ...) sont répartis dans le sens d'étendue principal X sur la deuxième face (2b) de la bande inscriptible (2) est inférieur ou égal à 1,8 mm est supérieur à 1,2 mm.

3. Bande de marquage (1) selon la revendication 2, **caractérisée en ce que** l'écartement X_{R} selon lequel les profils d'enclenchement (3-1, 3-2, 3-3, ...) sont répartis dans le sens d'étendue principal X sur la deuxième face (2b) de la bande inscriptible (2) mesure 1,5 mm.

4. Bande de marquage (1) selon l'une des revendications précédentes, **caractérisée en ce que** chaque profil d'enclenchement (3-1, 3-2, 3-3, ...) comporte une, deux ou plusieurs barrettes d'enclenchement (31, 32).

5. Bande de marquage (1) selon l'une des revendications précédentes, **caractérisée en ce que** les barrettes d'enclenchement (31, 32) sont disposées deux par deux dans un plan commun qui est orienté perpendiculairement au sens d'alignement X.

6. Bande de marquage (1) selon l'une des revendications précédentes, **caractérisée en ce que** les barrettes d'enclenchement (31, 32) sont réparties selon l'écartement avec un décalage individuel vers la gauche et la droite sur la bande de marquage.

7. Bande de marquage (1) selon l'une des revendications précédentes, **caractérisée en ce qu'**une ou plusieurs des barrettes d'enclenchement (31, 32) s'appuient chacune sur une zone de fond (33) en forme de plaque.

8. Bande de marquage (1) selon l'une des revendications précédentes, **caractérisée en ce que** les zones de fond (33) en forme de plaque de profils d'enclenchement de marqueur (3-1, 3-2, 3-3, ...) voisins sont séparées les unes des autres par des fentes (34).

9. Bande de marquage (1) selon l'une des revendications précédentes, **caractérisée en ce que** les barrettes d'enclenchement (31, 32) des réceptacles d'enclenchement de marqueurs (4a, 4b, 4c, ...) se resserrent à partir de la zone de fond (33) en forme de plaque correspondante.

10. Bande de marquage (1) selon l'une des revendications précédentes, **caractérisée en ce qu'**elle est fabriquée et peut être présentée sous la forme d'une barre, en particulier de telle manière qu'une ou plusieurs bandes de marquage plus courtes de longueur différente puissent être recoupées dans la barre.

11. Bande de marquage (1) selon l'une des revendications précédentes, **caractérisée en ce qu'**elle est fabriquée et peut être présentée sous la forme d'un matériau en rouleau, de telle manière qu'une ou plusieurs bandes de marquage plus courtes de longueur différente puissent être recoupées dans le rouleau.

12. Bande de marquage (1) selon l'une des revendications précédentes, **caractérisée en ce qu'**elle comporte au moins une ou plusieurs perforations, en particulier selon l'écartement.

13. Bande de marquage (1) selon l'une des revendications précédentes, **caractérisée en ce qu'**elle est fabriquée dans une seule matière plastique.

14. Bande de marquage (1) selon l'une des revendications précédentes, **caractérisée en ce qu'**elle est fabriquée dans deux matières plastiques, les bandes inscriptibles (2) étant faites d'une première matière plastique plus molle et les profils d'enclenchement de marqueurs de la deuxième matière plastique plus dure.

15. Bande de marquage (1) selon l'une des revendications précédentes, **caractérisée en ce qu'**elle est fabriquée par un procédé de coextrusion ou un procédé de moulage par injection.

16. Alignement d'appareillages électriques muni d'une bande de marquage (1) selon l'une des revendications précédentes, **caractérisé en ce que** les appareillages électriques comportent chacun un réceptacle d'enclenchement de marqueurs (4a, 4b, 4c, ...) dans lequel les profils d'enclenchement (3-1, 3-2, 3-3, ...) se mettent en prise, plus d'un seul profil d'enclenchement (3-1, 3-2, 3-3, ...) se mettant en prise dans chacun des réceptacles d'enclenchement de marqueurs (4a, 4b, 4c) des appareillages (5a, 5b, 5c, ...) alignés les uns avec les autres dans un sens d'alignement X des appareillages électriques (5a, 5b, 5c, ...)

17. Alignement selon la revendication 16, **caractérisé en ce que** l'écartement selon lequel les différents profils d'enclenchement (3-1, 3-2, 3-3, ...) sont répartis sur la deuxième face (2b) de la bande inscriptible (2) est au moins deux fois plus petit que la plus petite dimension, en particulier l'écartement, des appareillages électriques pouvant être alignés entre eux dans le sens d'étendue principal (X) ou dans le sens d'alignement des appareillages électriques (5a, 5b, 5c, ...).

18. Alignement selon la revendication 16 ou 17, **caractérisé en ce que**, dans la zone de certaines parois (6a, 6b, 6c, ...) des réceptacles d'enclenchement de marqueurs (4a, 4b, 4c, ...), certains des profils d'enclenchement (3-1, 3-2, 3-3, ...) sont orientés chacun à peu près à l'oblique par une des parois par rapport au plan X-Y dans lequel les profils d'enclenchement (3-1, 3-2, 3-3, ...) s'étendent pour l'essentiel.
